# EUROPEAN PATENT SPECIFICATION

(11) **EP 3 654 310 B1**
(45) Date of publication and mention of the grant of the patent: **26.01.2022**
(21) Application number: 18207104.3
(22) Date of filing: 19.11.2018
(51) Int. Cl.: G08G 1/01, G08G 1/0967, G01C 21/34

(54) **DEPARTURE TIME DURATION FOR A VEHICLE**
ABFAHRTZEITDAUER FÜR EIN FAHRZEUG
DURÉE DE L'HEURE DE DÉPART D'UN VÉHICULE

(43) Date of publication of application: 20.05.2020
(73) Proprietor: Ningbo Geely Automobile Research & Development Co. Ltd., Hangzhou Bay New District Ningbo 315336 (CN)
(72) Inventor: LINDBERG NILSSON, Erik, 417 47 GÖTEBORG (SE); NILSSON, Magnus, 448 37 FLODA (SE)
(74) Representative: Zacco Sweden AB

(56) References cited:
- CN-A- 106 467 034
- US-A1- 2014 278 071
- US-A1- 2016 290 816
- US-A1- 2018 313 657

## Description

### TECHNICAL FIELD

The present disclosure relates generally to the field of departure time duration for a vehicle. More particularly, it relates to supporting a user of a vehicle with information regarding a departure time duration.

### BACKGROUND

A vehicle may typically be parked outside a house, on a street, in a parking lot or in a garage. In different weather conditions, different departure time durations are required. For example, if it has been snowing all night, a vehicle user may spend an extensive amount of time in the morning preparing the vehicle for departure e.g. by removing snow and ice from the vehicle or around the vehicle or on the road or on the drive-way or on the garage entrance/exit before the vehicle is able to depart.

Heating the vehicle in order to remove snow is an option however this is not feasible in all situations, especially not in very cold weather with much snow which may result in a lengthy departure time duration which may have not been anticipated by the vehicle user which may lead the vehicle user to arrive late to work, school etc.

Therefore, there is a need for alternative approaches to supporting a user of a vehicle with information regarding a departure time duration. One example of art in the field is US 2018 0313657, disclosing routing based on detected stops.

### SUMMARY

It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an arrangement is referred to herein, it is to be understood as a physical product; e.g., an apparatus. The physical product may comprise one or more parts, such as controlling circuitry in the form of one or more controllers, one or more processors, or the like. An object of some embodiments is to provide alternative approaches to supporting a user of a vehicle with information regarding a departure time duration.

According to a first aspect, this is achieved by a method for supporting a user of a vehicle with information regarding a departure time duration.

The method comprises measuring a departure time duration for a first vehicle user associated to a geographical area wherein the measuring of the departure time duration for the first vehicle user starts from when the first vehicle user arrives at the vehicle and ends when the vehicle is in motion, reporting the measured departure time duration for the first vehicle user and the associated geographical area, and estimating a current departure time duration for at least a second vehicle user associated to the geographical area based on the measured departure time duration for the first vehicle user.

The method further comprises determining any deviation of the estimated current departure time duration from a default departure time duration and when a deviation is determined, notifying the at least second vehicle user with information regarding the determined deviation of the departure time duration for the geographical area.

An advantage of some embodiments is that the vehicle user is supported with information regarding the departure time duration.

Another advantage of some embodiments is that the vehicle user may, based on the information regarding the departure time duration, plan for a lengthy departure time duration such that late arrival to a destination such as work or school is avoided.

Yet an advantage of some embodiments is that vehicle users may, based on the information regarding the departure time duration, choose another option than travelling with the vehicle e.g. staying at home, working from home, choosing public transportation etc.

In some embodiments, the method further comprises obtaining weather information for the geographical area, time of day and time of year for estimating the current departure time duration.

An advantage of some embodiments is that a correlation between the obtained information and the departure time duration can be determined.

In some embodiments, the obtained weather information is adapted to comprise one or more of an ambient temperature, an amount of snowfall, and an air humidity.

An advantage of some embodiments is that a correlation between the obtained information and the departure time duration can be more precisely determined.

An advantage of the invention is that the at least second vehicle user may benefit from the measured departure time duration for the first vehicle user.

In some embodiments, the reporting further comprises reporting the obtained weather information for the geographical area, time of day and time of year for estimating the current departure time duration.

An advantage of some embodiments is that the at least second vehicle user may benefit from the measured departure time duration for the first vehicle user and a correlation between the obtained information and the measured departure time duration may be determined.

In some embodiments, the estimating of the current departure time duration for the at least second vehicle user is based on a plurality reports.

An advantage of some embodiments is that the at least second vehicle user may benefit from the measured departure time duration for the first vehicle user and a correlation between the obtained information and the measured departure time duration may be more precisely determined.

In some embodiments, the determined deviation of the departure time duration comprises a delayed departure time.

An advantage of some embodiments is that a vehicle user may plan for a lengthy departure time duration such that late arrival to a destination may be avoided.

According to the invention, the measuring of the departure time duration for the first vehicle user starts from when the first vehicle user arrives at the vehicle and ends when the vehicle is in motion.

An advantage of some embodiments is that the measuring starts when the vehicle user arrives at the vehicle and taking into account the time it takes to remove snow around the vehicle or leading up to the vehicle.

In some embodiments, the measuring of the departure time duration for the first vehicle user starts from an unlock event of the vehicle when the first vehicle user arrives at the vehicle.

An advantage of some embodiments is that the measuring starts when the vehicle user actually unlocks the vehicle leading to a more precise measurement and reliable data.

In some embodiments, the measuring of the departure time duration for the first vehicle user ends when the vehicle has been in motion for a certain distance.

An advantage of some embodiments is that the measuring ends when the vehicle actually has been in motion for a certain distance leading to a more precise measurement and reliable data.

A second aspect is an apparatus for supporting a user of a vehicle with information regarding a departure time duration.

The apparatus comprises a memory comprising executable instructions and one or more processors configured to communicate with the memory.

The one or more processors are configured to cause the apparatus to measure a departure time duration for a vehicle user associated to a geographical area and report the measured departure time duration and the associated geographical area to a cloud service for estimating a current departure time duration and determining any deviation of the estimated current departure time duration.

An advantage of some embodiments is that the vehicle user is supported with information regarding the departure time duration.

Another advantage of some embodiments is that the vehicle user may, based on the information regarding the departure time duration, plan for a lengthy departure time duration such that late arrival to a destination such as work or school is avoided.

Yet an advantage of some embodiments is that the at least second vehicle user may benefit from the measured departure time duration.

Yet another advantage of some embodiments is that vehicle users may, based on the information regarding the departure time duration, choose another option than travelling with the vehicle e.g. staying at home, working from home, choosing public transportation etc.

In some embodiments, the one or more processors are further configured to cause the apparatus to obtain weather information for the geographical area, time of day and time of year.

An advantage of some embodiments is that a correlation between the obtained information and the measured departure time duration can be determined.

A third aspect is a vehicle comprising the apparatus of the second aspect.

An advantage of some embodiments is that the vehicle user is supported with information regarding the departure time duration.

Another advantage of some embodiments is that the vehicle user may, based on the information regarding the departure time duration, plan for a lengthy departure time duration such that late arrival to a destination such as work or school is avoided.

Yet an advantage of some embodiments is that the at least second vehicle user may benefit from a measured departure time duration.

Yet another advantage of some embodiments is that vehicle users may, based on the information regarding the departure time duration, choose another option than travelling with the vehicle e.g. staying at home, working from home, choosing public transportation etc.

A fourth aspect is a cloud service for supporting a user of a vehicle with information regarding a departure time duration.

The cloud service is configured to:receive at least one report comprising information regarding a departure time duration for a first vehicle user associated to a geographical area wherein the measuring of the departure time duration for the first vehicle user starts from when the first vehicle user arrives at the vehicle and ends when the vehicle is in motion, estimate a current departure time duration based on the received at least one report, determine any deviation of the estimated current departure time duration from a default departure time duration, and when a deviation is determined, notify the at least second vehicle user with information regarding the determined deviation of the departure time duration for the geographical area.

An advantage of some embodiments is that the vehicle user is supported with information regarding the departure time duration.

Another advantage of some embodiments is that the vehicle user may, based on the information regarding the departure time duration, plan for a lengthy departure time duration such that late arrival to a destination such as work or school is avoided.

Yet an advantage of some embodiments is that the at least second vehicle user may benefit from a measured departure time duration.

Yet another advantage of some embodiments is that vehicle users may, based on the information regarding the departure time duration, choose another option than travelling with the vehicle e.g. staying at home, working from home, choosing public transportation etc.

In some embodiments, the cloud service is further configured to receive at least one report comprising weather information for the geographical area, time of day and time of year from a cloud service.

An advantage of some embodiments is that a correlation between the obtained information and the measured departure time duration can be determined.

According to the invention, the cloud service is further configured to estimate a current departure time duration based on the received at least one report, determine any deviation of the estimated current departure time duration from a default departure time duration, and when a deviation is determined, notify the at least second vehicle user with information regarding the determined deviation of the departure time duration for the geographical area.

An advantage of some embodiments is that the at least second vehicle user may benefit from the notification by planning for a lengthy departure time duration such that late arrival to a destination such as work or school is avoided.

A fifth aspect is a system for supporting a user of a vehicle with information regarding a departure time duration.

The system comprises a time measuring module configured to measure a departure time duration for a first vehicle user associated to a geographical area, wherein the measuring of the departure time duration for the first vehicle user starts from when the first vehicle user arrives at the vehicle and ends when the vehicle is in motion, a reporting module configured to report the measured departure time duration for the first vehicle user and the associated geographical area, an estimating module configured to estimate a current departure time duration for at least a second vehicle user associated to the geographical area based on the reported departure time duration, a determining module configured to determine deviations of the estimated departure time duration from a default departure time duration, and a notification module configured to notify the at least second vehicle user with information regarding the determined deviation of the departure time duration for the geographical area. An advantage of some embodiments is that the vehicle user is supported with information regarding the departure time duration.

Another advantage of some embodiments is that the vehicle user may, based on the information regarding the departure time duration, plan for a lengthy departure time duration such that late arrival to a destination such as work or school is avoided.

Yet an advantage of some embodiments is that the at least second vehicle user may benefit from a measured departure time duration.

Yet another advantage of some embodiments is that vehicle users may, based on the information regarding the departure time duration, choose another option than travelling with the vehicle e.g. staying at home, working from home, choosing public transportation etc.

In some embodiments, the system further comprises a weather obtaining module configured to obtain weather information for the geographical area, time of day and time of year.

An advantage of some embodiments is that a correlation between the obtained information and the departure time duration can be determined.

A sixth aspect is a computer program product comprising a non-transitory computer readable medium, having thereon a computer program comprising program instructions. The computer program is loadable into a data processing unit and configured to cause execution of the method according to the first aspect when the computer program is run by the data processing unit.

In some embodiments, any of the above aspects may additionally have features identical with or corresponding to any of the various features as explained above for any of the other aspects.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1 is a flowchart illustrating example method steps according to some embodiments;
Figure 2 is a schematic overview illustrating an example system according to some embodiments;
Figure 3a is a schematic drawing illustrating an example environment according to some embodiments;
Figure 3b is a schematic drawing illustrating an example environment according to some embodiments;
Figure 4 is a schematic block diagram illustrating an example arrangement according to some embodiments; and
Figure 5 is a schematic drawing illustrating an example computer readable medium according to some embodiments.

### DETAILED DESCRIPTION

As already mentioned above, it should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

In the following, embodiments will be described where alternative approaches to supporting a user of a vehicle with information regarding a departure time duration are provided.

A departure time duration comprises the required time for a vehicle user to render the vehicle in a condition wherein the vehicle is able to depart from a geographical area.

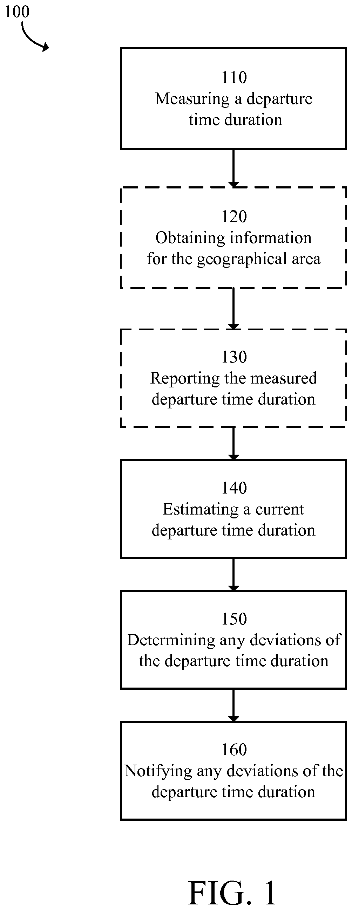

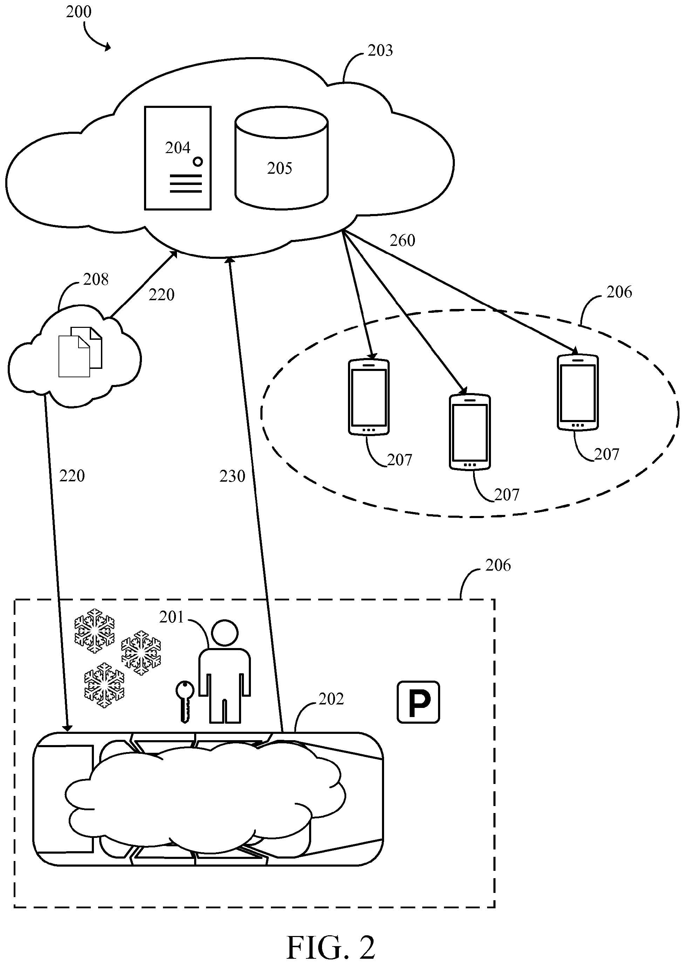

Figure 1 is a flowchart illustrating example method steps according to some embodiments. The departure time duration method 100 is for supporting a user of a vehicle with information regarding a departure time duration. Thus, the departure time duration method 100 may, for example, be performed by the departure time duration system 200 of Figure 2.

The departure time duration method 100 comprises following steps.

In step 110, a departure time duration for a first vehicle user 201 associated to a geographical area 206 is measured.

In step 140, a current departure time duration for at least a second vehicle user 207 associated to the geographical area 206 is estimated based on the measured departure time duration for the first vehicle user 201.

In step 150, any deviation of the estimated current departure time duration from a default departure time duration is determined.

In step 160, when a deviation is determined, the at least second vehicle user 207 is notified with information regarding the determined deviation of the departure time duration for the geographical area 206.

In some embodiments, the departure time duration method 100 further comprises the following step.

In step 120, weather information for the geographical area 206, time of day and time of year for estimating the current departure time duration are obtained 220.

In some embodiments, the obtained weather information 220 is adapted to comprise one or more of an ambient temperature, an amount of snowfall, and an air humidity.

In some embodiments, the departure time duration method 100 further comprises the following step.

In step 130, the measured departure time duration for the first vehicle user and the associated geographical area are reported 230.

In some embodiments, the reporting 230 further comprises reporting the obtained weather information for the geographical area, time of day and time of year for estimating the current departure time duration.

In some embodiments, the estimating 140 of the current departure time duration for the at least second vehicle user is based on a plurality reports.

In some embodiments, the determined deviation 150 of the departure time duration comprises a delayed departure time. according to the invention, the measuring 110 of the departure time duration for the first vehicle user 201 starts from when the first vehicle user 201 arrives at the vehicle 202 and ends when the vehicle is in motion.

In some embodiments, the measuring 110 of the departure time duration for the first vehicle user 201 starts from an unlock event of the vehicle 202 when the first vehicle user 201 arrives at the vehicle 202.

In some embodiments, the measuring 110 of the departure time duration for the first vehicle user 201 ends when the vehicle 202 has been in motion for a certain distance.

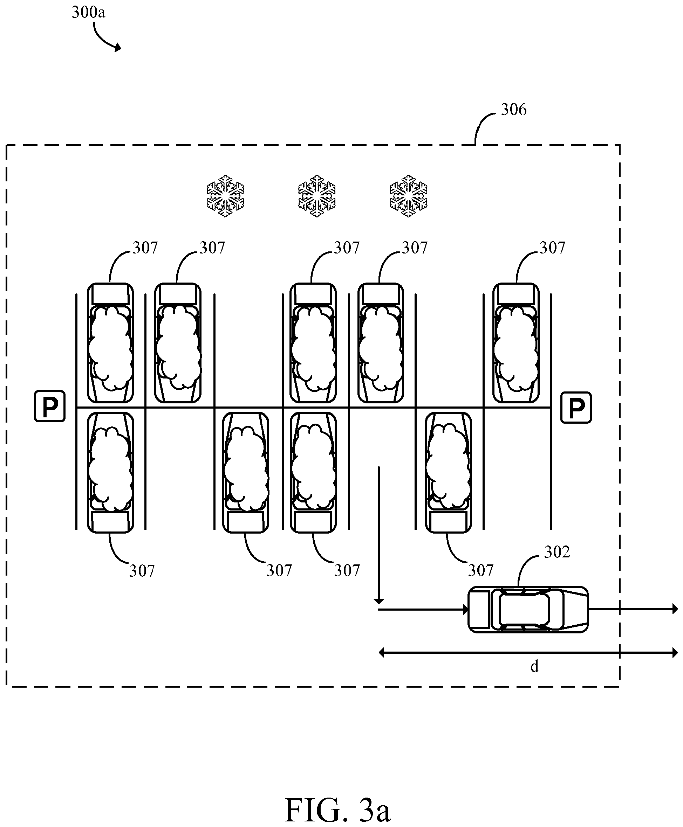

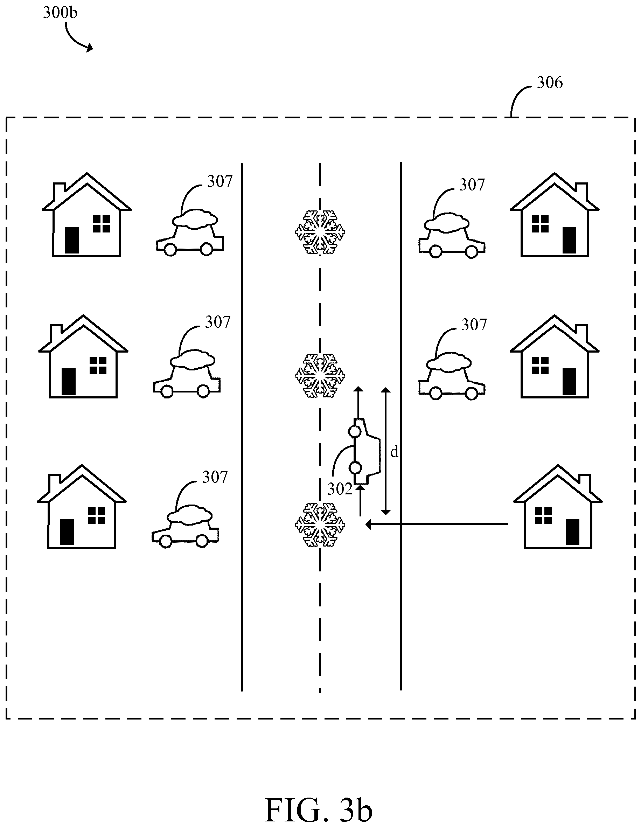

Figure 2 is a schematic overview illustrating an example system according to some embodiments. The departure time duration system 200 is for supporting a user of a vehicle with information regarding a departure time duration. Thus, the departure time duration system 200 may, for example, be utilized for an environment 300a of Figure 3a or for an environment 300b of Fig 3b.

A departure time duration for a first vehicle user 201 associated to a geographical area 206 is measured. More specifically, the departure time duration comprises the required time for the first vehicle user 201 to render the vehicle 202 in a condition wherein the vehicle 202 is able to depart from the geographical area 206 e.g. by removing snow and ice from the vehicle or around the vehicle or on the road or on the drive-way or on the garage entrance/exit before the vehicle is able to depart. The measuring is performed by an apparatus (not shown) configured for measuring time comprised in the vehicle 202.

A current departure time duration for at least a second vehicle user 207 associated to the geographical area 206 is estimated in a cloud service 203 based on the measured departure time duration for the first vehicle user 201. More specifically, the current departure time duration is estimated based on at least a report 230 from the vehicle 202 comprising the measured departure time duration for the first vehicle user 201 and the associated geographical area 206 and received at the cloud service 203.

In some embodiments, the reporting 230 to the cloud service 203 further comprises reporting obtained weather information 220 for the geographical area 206 from a weather service 208, time of day and time of year to a cloud service 203 for estimating the current departure time duration.

In some embodiments, the reporting of the weather information 220 for the geographical area 206 may be reported to the cloud service 203 directly from the weather service 208.

The weather service 208 may be comprised in a separate cloud service or in the same cloud service as cloud service 203. The weather service 208 is further configured to also provide information regarding time of day and time of year to the cloud service 203 in addition to the weather information for the geographical area 206.

In some embodiments, the obtained weather information is adapted to comprise one or more of an ambient temperature, an amount of snowfall, and an air humidity.

In some embodiments, the estimating of the current departure time duration for the at least second vehicle user 207 is based on a plurality of reports 230.

The cloud service 203 is configured to, based on the at least one report 230, determine any deviation of the estimated current departure time duration from a default departure time duration. More specifically, the cloud service 203 is configured to by means of servers 204 and databases 205 associated to the cloud service 203 to calculate e.g. in a statistical method the estimated current departure time duration and determine any deviation of the estimated current departure time duration from a default departure time duration.

When a deviation is determined, the at least second vehicle user 207 associated to the same geographical area 206, is notified with information regarding the determined deviation of the default departure time duration for the geographical area 206. More specifically, a wireless communication device of the at least second vehicle user 207 receives a pushed notification from the cloud service 203 with information regarding the determined deviation of the default time duration for the geographical area 206.

In some embodiments, the determined deviation of the default departure time duration comprises a delayed departure time.

According to the invention, the measuring, i.e. by the vehicle 202, of the departure time duration for the first vehicle user 201 starts from when the first vehicle user 201 arrives at the vehicle 202 and ends when the vehicle 202 is in motion.

In some embodiments, the measuring, i.e. by the vehicle 202, of the departure time duration for the first vehicle user 201 starts from an unlock event of the vehicle when the first vehicle user arrives 201 at the vehicle 202.

In some embodiments, the measuring, i.e. by the vehicle 202, of the departure time duration for the first vehicle user 201 ends when the vehicle has been in motion for a certain distance d e.g. 10 meters.

The association to the geographical area 206 comprises a physical presence of the vehicle 202 of the first vehicle user 201 in the geographical area 206 and physical presence of vehicle(s) of the at least second vehicle user 207 in the geographical area 206 of which associations may be determined by means of fixed base stations that comprise wireless carrier network or wireless communication apparatus comprised in a vehicle wherein the wireless communication device participates in a position determination e.g. via GPS.

Vehicles that are parked under a roof e.g. in a garage or in a carport, and within the same geographical area 206 may get excluded from reporting their measured departure time duration to the cloud service 203 such that their data is prevented from causing an erroneous estimation of departure time duration in the cloud service 203. However, notifications from the cloud service 203 are still pushed out to these vehicle users in the geographical area 206 as their drive-ways or garage entrance/exits may still be blocked with snow even though the vehicles themselves are not covered in snow and therefore it is still relevant information for these vehicle users.

Figure 3a is a schematic drawing illustrating an example environment according to some embodiments. The departure time duration system 200 illustrated in Figure 2 may, for example, be utilized for an environment 300a of Figure 3a.

Figure 3a illustrates an environment with a parking lot in a geographical area 306 comprising a plurality of parked vehicles 307 which are covered in snow and ice. The environment also illustrates a vehicle 302 which has been rendered (i.e. wherein snow and ice have been removed from or around the vehicle) in a condition wherein the vehicle 302 has been set in motion with the mission to depart from the geographical area 306 and wherein the vehicle 302 has been in motion for a certain distance d e.g. 10 meters.

In this environment, the vehicle users of the vehicles 307 are supported with information regarding a departure time duration based on the measured departure time duration for the vehicle 302 associated to the same geographical area 306. The support comprises notifications pushed out to wireless communication devices of the vehicle users for the vehicles 307 wherein the notifications comprise a determined deviation of an estimated current departure time duration from a default time duration which is based on a measured departure time duration for the vehicle 302. In this way, the vehicle users for the vehicles 307 are able to plan for the deviation in the departure time duration which may have not been anticipated by the vehicle users themselves.

Figure 3b is a schematic drawing illustrating an example environment according to some embodiments. The departure time duration system 200 illustrated in Figure 2 may, for example, be utilized for an environment 300b of Figure 3b.

Figure 3b illustrates an environment with a residential area in a geographical area 306 comprising a plurality of houses with parked vehicles 307 outside the houses which are covered in snow and ice. The environment also illustrates a vehicle 302 which has been rendered (i.e. wherein snow and ice have been removed from or around the vehicle) in a condition wherein the vehicle 302 has been set in motion with the mission to depart from the geographical area 306 and wherein the vehicle has been in motion for a certain distance d e.g. 10 meters.

In this environment, the vehicle users of the vehicles 307 are supported with information regarding a departure time duration based on the measured departure time duration for the vehicle 302 associated to the same geographical area 306. The support comprises notifications pushed out to wireless communication devices of the vehicle users for the vehicles 307 wherein the notifications comprise a determined deviation of an estimated current departure time duration from a default time duration which is based on a measured departure time duration for the vehicle 302. In this way, the vehicle users of the vehicles 307 are able to plan for the deviation in the departure time duration which may have not been anticipated by the vehicle users themselves.

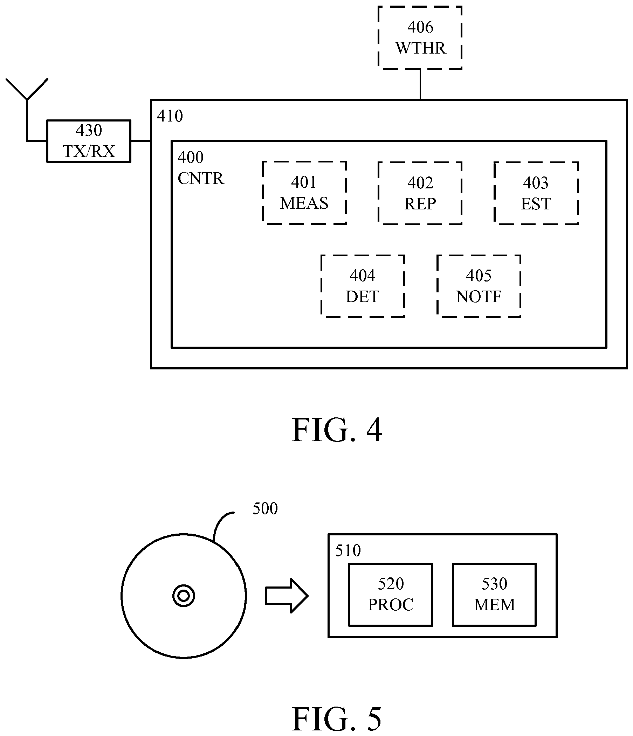

Figure 4 is a schematic block diagram illustrating an example arrangement according to some embodiments. The example arrangement is a departure time duration arrangement 410 for supporting a user of a vehicle with information regarding a departure time duration, wherein the arrangement is configured to be associated with weather service arrangement WTHR 406, e.g. weather information providing circuitry or weather information obtaining circuitry, configured to obtain weather information for the geographical area, time of day and time of year.

The departure time duration arrangement 410 comprises controlling circuitry CNTR 400, which may in turn comprise a time measuring arrangement MEAS 401, e.g. time measuring circuitry, configured to measure a departure time duration for a first vehicle user associated to a geographical area, a reporting arrangement REP 402, e.g. reporting circuitry, configured to report the measured departure time duration for the first vehicle user and the associated geographical area, an estimating arrangement EST 403, e.g. estimating circuitry, configured to estimate a current departure time duration for at least a second vehicle user associated to the geographical area based on the reported departure time duration, a determining arrangement DET 404, e.g. determining circuitry, configured to determine deviations of the estimated departure time duration from a default departure time duration, and a notification arrangement 405, e.g. notification circuitry, configured to notify the at least second vehicle user with information regarding the determined deviation of the departure time duration for the geographical area.

The departure time duration arrangement 410 may be comprised in the departure time duration system 200 described in connection with Figure 2 and/or the departure time duration arrangement 410 may be configured to perform method steps of any of the methods described in connection with Figure 1.

Figure 5 is a schematic drawing illustrating an example computer readable medium according to some embodiments. The computer program product comprises a non-transitory computer readable medium 500 having thereon a computer program 510 comprising program instructions, wherein the computer program being loadable into a data processing unit and configured to cause execution of the method steps of any of the methods described in connection with Figure 1.

Generally, when an arrangement is referred to herein, it is to be understood as a physical product; e.g., an apparatus. The physical product may comprise one or more parts, such as controlling circuitry in the form of one or more controllers, one or more processors, or the like.

The described embodiments and their equivalents may be realized in software or hardware or a combination thereof. The embodiments may be performed by general purpose circuitry. Examples of general purpose circuitry include digital signal processors (DSP), central processing units (CPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a vehicle.

Embodiments may appear within an electronic apparatus (associated with or comprised in a vehicle) comprising arrangements, circuitry, and/or logic according to any of the embodiments described herein. Alternatively or additionally, an electronic apparatus (associated with or comprised in a vehicle) may be configured to perform methods according to any of the embodiments described herein.

According to some embodiments, a computer program product comprises a computer readable medium such as, for example a universal serial bus (USB) memory, a plug-in card, an embedded drive or a read only memory (ROM). Figure 5 illustrates an example computer readable medium in the form of a compact disc (CD) ROM 500. The computer readable medium has stored thereon a computer program comprising program instructions. The computer program is loadable into a data processor (PROC) 520, which may, for example, be comprised in an apparatus or vehicle 510. When loaded into the data processing unit, the computer program may be stored in a memory (MEM) 530 associated with or comprised in the data-processing unit. According to some embodiments, the computer program may, when loaded into and run by the data processing unit, cause execution of method steps according to, for example, any of the methods illustrated in Figure 1 or otherwise described herein.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments that would still fall within the scope of the claims.

For example, the method embodiments described herein discloses example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Any feature of any of the embodiments disclosed herein may be applied to any other embodiment, wherever suitable. Likewise, any advantage of any of the embodiments may apply to any other embodiments, and vice versa.

Hence, it should be understood that the details of the described embodiments are merely examples brought forward for illustrative purposes, and that all variations that fall within the scope of the claims are intended to be embraced therein.

## Claims

1. A method for supporting a user of a vehicle with information regarding a departure time duration, comprising the steps of:
measuring (110) a departure time duration for a first vehicle user associated to a geographical area, wherein the measuring (110) of the departure time duration for the first vehicle user starts from when the first vehicle user arrives at the vehicle and ends when the vehicle is in motion, reporting the measured departure time duration for the first vehicle user and the associated geographical area,
estimating (140) a current departure time duration for at least a second vehicle user associated to the geographical area based on the measured departure time duration for the first vehicle user,
determining (150) any deviation of the estimated current departure time duration from a default departure time duration, and
when a deviation is determined, notifying (160) the at least second vehicle user with information regarding the determined deviation of said departure time duration for the geographical area.

2. The method according to claim 1, further comprising the step of obtaining (120) weather information for the geographical area, time of day and time of year for estimating the current departure time duration.

3. The method according to claim 2, wherein the obtained weather information is adapted to comprise one or more of: an ambient temperature, an amount of snowfall, and an air humidity.

4. The method according to any of claims 1-3, wherein the reporting (130) further comprises reporting (130) the obtained weather information for the geographical area, time of day and time of year for estimating the current departure time duration.

5. The method according to any of claims 1-4, wherein the estimating (140) the current departure time duration for the at least second vehicle user is based on a plurality reports.

6. The method according to any of claims 1-5, wherein the determined deviation (150) of the default departure time duration comprises a delayed departure time.

7. The method according to any of claims 1-6, wherein the measuring (110) of the departure time duration for the first vehicle user starts from an unlock event of the vehicle when the first vehicle user arrives at the vehicle.

8. The method according to any of claims 1-6 wherein the measuring (110) of the departure time duration for the first vehicle user ends when the vehicle has been in motion for a certain distance (d).

9. An apparatus for supporting a user of a vehicle with information regarding a departure time duration, comprising:
a memory comprising executable instructions,
one or more processors configured to communicate with the memory wherein the one or more processors are configured to cause the apparatus to:
measure a departure time duration for a vehicle user (201) associated to a geographical area (206) wherein the measuring (110) of the departure time duration for the first vehicle user starts from when the first vehicle user arrives at the vehicle and ends when the vehicle is in motion, and
report (230) the measured departure time duration and the associated geographical area (206) to a cloud service (203) for estimating a current departure time duration and determining any deviation of the estimated current departure time duration.

10. The apparatus according to claim 9, wherein the one or more processors are further configured to cause the apparatus to obtain (220) weather information for the geographical area (206), time of day and time of year.

11. A vehicle (202) comprising the apparatus according to any of claims 9-10.

12. A cloud service (203) for supporting a user of a vehicle with information regarding a departure time duration, wherein the cloud service (203) is configured to:
receive at least one report (230) comprising information regarding a departure time duration for a first vehicle user (201) associated to a geographical area (206) wherein the measuring (110) of the departure time duration for the first vehicle user starts from when the first vehicle user arrives at the vehicle and ends when the vehicle is in motion, estimate a current departure time duration based on the received at least one report (220,230),
determine any deviation of the estimated current departure time duration from a default departure time duration, and
when a deviation is determined, notify (260) the at least second vehicle user (207) with information regarding the determined deviation of said departure time duration for the geographical area (206).

13. The cloud service according to claim 12, wherein the cloud service (203) is further configured to:
receive at least one report (220) comprising weather information for the geographical area (206), time of day and time of year from a cloud service 208.

14. A system for supporting a user of a vehicle with information regarding a departure time duration, comprising:
a time measuring module (401) configured to measure a departure time duration for a first vehicle user associated to a geographical area wherein the measuring (110) of the departure time duration for the first vehicle user starts from when the first vehicle user arrives at the vehicle and ends when the vehicle is in motion,
a reporting module (402) configured to report the measured departure time duration for the first vehicle user and the associated geographical area,
an estimating module (403) configured to estimate a current departure time duration for at least a second vehicle user associated to the geographical area based on the reported departure time duration,
a determining module (404) configured to determine deviations of the estimated departure time duration from a default departure time duration, and
a notification module (405) configured to notify the at least second vehicle user with information regarding said determined deviation of the departure time duration for the geographical area.

15. The system according to claim 14, further comprising: a weather obtaining module (406) configured to obtain weather information for the geographical area, time of day and time of year.

## Patentansprüche

1. Verfahren zur Unterstützung eines Benutzers eines Fahrzeugs mit Informationen über eine Abfahrtzeitdauer, umfassend die folgenden Schritte:
Messen (110) einer Abfahrtzeitdauer für einen ersten Fahrzeugbenutzer, der mit einem geographischen Bereich verknüpft ist, wobei das Messen (110) der Abfahrtzeitdauer für den ersten Fahrzeugbenutzer beginnt, wenn der erste Fahrzeugbenutzer am Fahrzeug ankommt und endet, wenn das Fahrzeug in Bewegung ist,
Berichten der gemessenen Abfahrtzeitdauer für den ersten Fahrzeugbenutzer und den verknüpften geographischen Bereich,
Schätzen (140) einer aktuellen Abfahrtzeitdauer für zumindest einen zweiten Fahrzeugbenutzer, der mit dem geographischen Bereich basierend auf der gemessenen Abfahrtzeitdauer für den ersten Fahrzeugbenutzer verknüpft ist,
Bestimmen (150) jeder Abweichung der geschätzten aktuellen Abfahrtzeitdauer von einer Standardabfahrtzeitdauer, und
wenn eine Abweichung bestimmt wird, Benachrichtigen (160) des zumindest zweiten Fahrzeugbenutzers mit Informationen über die bestimmte Abweichung der Abfahrtzeitdauer für den geographischen Bereich.

2. Verfahren nach Anspruch 1, ferner umfassend den Schritt des Erhaltens (120) von Wetterinformationen für den geographischen Bereich, die Tageszeit und die Jahreszeit, um die aktuelle Abfahrtzeitdauer zu schätzen.

3. Verfahren nach Anspruch 2, wobei die erhaltenen Wetterinformationen dazu angepasst sind, eines oder mehrere von Folgenden zu umfassen: eine Umgebungstemperatur, eine Menge von Schneefall und eine Luftfeuchtigkeit.

4. Verfahren nach einem der Ansprüche 1-3, wobei das Berichten (130) ferner das Berichten (130) der erhaltenen Wetterinformationen für den geographischen Bereich, die Tageszeit und die Jahreszeit umfasst, um die aktuelle Abfahrtzeitdauer zu schätzen.

5. Verfahren nach einem der Ansprüche 1-4, wobei das Schätzen (140) der aktuellen Abfahrtzeitdauer für den zumindest zweiten Fahrzeugbenutzer auf einer Mehrzahl von Berichten basiert.

6. Verfahren nach einem der Ansprüche 1-5, wobei die bestimmte Abweichung (150) von der Standardabfahrtzeitdauer eine verzögerte Abfahrtzeit umfasst.

7. Verfahren nach einem der Ansprüche 1-6, wobei das Messen (110) der Abfahrtzeitdauer für den ersten Fahrzeugbenutzer bei einem Entriegelungsereignis des Fahrzeugs beginnt, wenn der erste Fahrzeugbenutzer am Fahrzeug ankommt.

8. Verfahren nach einem der Ansprüche 1-6, wobei das Messen (110) der Abfahrtzeitdauer für den ersten Fahrzeugbenutzer endet, wenn sich das Fahrzeug für einen bestimmten Abstand (d) in Bewegung befunden hat.

9. Vorrichtung zur Unterstützung eines Benutzers eines Fahrzeugs mit Informationen über eine Abfahrtzeitdauer, umfassend:
einen Speicher umfassend ausführbare Anweisungen,
einen bzw. mehrere Prozessoren, die zur Kommunikation mit dem Speicher ausgelegt ist bzw. sind, wobei der eine bzw. die mehreren Prozessoren ausgelegt ist bzw. sind, um die Vorrichtung zu Folgendem zu veranlassen:
Messen einer Abfahrtzeitdauer für einen Fahrzeugbenutzer (201), der mit einem geographischen Bereich (206) verknüpft ist, wobei das Messen (110) der Abfahrtzeitdauer für den ersten Fahrzeugbenutzer beginnt, wenn der erste Fahrzeugbenutzer am Fahrzeug ankommt und endet, wenn das Fahrzeug in Bewegung ist, und
Berichten (230) der gemessenen Abfahrtzeitdauer und des verknüpften geographischen Bereichs (206) an einen Cloud Service (203), um eine aktuelle Abfahrtzeitdauer zu schätzen und eine jegliche Abweichung der geschätzten aktuellen Abfahrtzeitdauer zu bestimmen.

10. Vorrichtung nach Anspruch 9, wobei der eine bzw. die mehreren Prozessoren ferner ausgelegt ist bzw. sind, um die Vorrichtung dazu zu veranlassen, Wetterinformationen für den geographischen Bereich (206), die Tageszeit und die Jahreszeit zu erhalten (220).

11. Fahrzeug (202) umfassend die Vorrichtung nach einem der Ansprüche 9-10.

12. Cloud Service (203) zur Unterstützung eines Benutzers eines Fahrzeugs mit Informationen über eine Abfahrtzeitdauer, wobei der Cloud Service (203) zu Folgendem ausgelegt ist:
Empfangen mindestens eines Berichts (230) umfassend Informationen über eine Abfahrtzeitdauer für einen ersten Fahrzeugbenutzer (201), der mit einem geographischen Bereich (206) verknüpft ist, wobei das Messen (110) der Abfahrtzeitdauer für den ersten Fahrzeugbenutzer beginnt, wenn der erste Fahrzeugbenutzer am Fahrzeug ankommt und endet, wenn das Fahrzeug in Bewegung ist, Schätzen einer aktuellen Abfahrtzeitdauer basierend auf dem empfangenen mindestens einen Berichts (220, 230),
Bestimmen einer jeglichen Abweichung der geschätzten aktuellen Abfahrtzeitdauer aus einer Standardabfahrtzeitdauer, und
wenn eine Abweichung bestimmt wird, Benachrichtigen (260) des zumindest zweiten Fahrzeugbenutzers (207) mit Informationen über die bestimmte Abweichung der Abfahrtzeitdauer für den geographischen Bereich (206).

13. Cloud Service nach Anspruch 12, wobei der Cloud Service (203) ferner zu Folgendem ausgelegt ist:
Empfangen mindestens eines Berichts (220) umfassend Wetterinformationen für den geographischen Bereich (206), die Tageszeit und die Jahreszeit von einem Cloud Service 208.

14. System zur Unterstützung eines Benutzers eines Fahrzeugs mit Informationen über eine Abfahrtzeitdauer, umfassend:
ein Zeitmessmodul (401), das zum Messen einer Abfahrtzeitdauer für einen ersten Fahrzeugbenutzer, der mit einem geographischen Bereich verknüpft ist, ausgelegt ist, wobei das Messen (110) der Abfahrtzeitdauer für den ersten Fahrzeugbenutzer beginnt, wenn der erste Fahrzeugbenutzer am Fahrzeug ankommt und endet, wenn das Fahrzeug in Bewegung ist,
ein Berichtmodul (402), das zum Berichten der gemessenen Abfahrtzeitdauer für den ersten Fahrzeugbenutzer und den verknüpften geographischen Bereich ausgelegt ist,
ein Schätzmodul (403), das zum Schätzen einer aktuellen Abfahrtzeitdauer für mindestens einen zweiten Fahrzeugbenutzer, der mit dem geographischen Bereich verknüpft ist, basierend auf der berichteten Abfahrtzeitdauer,
ein Bestimmungsmodul (404), das zum Bestimmen von Abweichungen der geschätzten Abfahrtzeitdauer von einer Standartabfahrtzeitdauer ausgelegt ist, und
ein Benachrichtigungsmodul (405), das zum Benachrichtigen des mindestens zweiten Fahrzeugbenutzers mit Informationen über die bestimmte Abweichung der Abfahrtzeitdauer für den geographischen Bereich ausgelegt ist.

15. System nach Anspruch 14, ferner umfassend:
ein Wettererhaltmodul (406), das zum Erhalten von Wetterinformationen für den geographischen Bereich, die Tageszeit und die Jahreszeit ausgelegt ist.

## Revendications

1. Procédé d'assistance à un utilisateur d'un véhicule avec des informations concernant une durée d'heure de départ, comprenant les étapes consistant à
mesurer (110) une durée d'heure de départ pour un premier utilisateur de véhicule associé à une zone géographique, la mesure (110) de la durée d'heure de départ pour le premier utilisateur de véhicule étant lancée lorsque le premier utilisateur arrive au véhicule et finissant lorsque le véhicule est en mouvement,
rapporter la durée d'heure de départ mesurée pour le premier utilisateur de véhicule et la zone géographique associée,
estimer (140) une durée d'heure de départ actuelle pour au moins un deuxième utilisateur de véhicule associé à la zone géographique en fonction de la durée d'heure de départ mesurée pour le premier utilisateur de véhicule, déterminer (150) tout écart de la durée d'heure de départ actuelle estimée à partir d'une durée d'heure de départ par défaut, et
lorsqu'un écart est déterminé, notifier (160) à l'au moins deuxième utilisateur de véhicule des informations concernant l'écart déterminé de ladite durée d'heure de départ pour la zone géographique.

2. Procédé selon la revendication 1, comprenant en outre l'étape d'obtention (120) d'informations météorologiques pour la zone géographique, l'heure du jour et le temps de l'année pour estimer la durée d'heure de départ actuelle.

3. Procédé selon la revendication 2, dans lequel les informations météorologiques obtenues sont adaptées pour comprendre une ou plusieurs parmi : une température ambiante, une quantité de chute de neige et une humidité de l'air.

4. Procédé selon l'une quelconque des revendications 1 à 3, dans lequel le rapport (130) comprend en outre le rapport (130) des informations météorologiques obtenues pour la zone géographique, l'heure du jour et le temps de l'année pour estimer la durée d'heure de départ actuelle.

5. Procédé selon l'une quelconque des revendications 1 à 4, dans lequel l'estimation (140) de la durée d'heure de départ actuelle pour l'au moins deuxième utilisateur de véhicule est basée sur une pluralité de rapports.

6. Procédé selon l'une quelconque des revendications 1 à 5, dans lequel l'écart déterminé (150) de la durée d'heure de départ par défaut comprend une heure de départ retardée.

7. Procédé selon l'une quelconque des revendications 1 à 6, dans lequel la mesure (110) de la durée d'heure de départ pour le premier utilisateur de véhicule commence à partir d'un événement de déverrouillage du véhicule lorsque le premier utilisateur de véhicule arrive au véhicule.

8. Procédé selon l'une quelconque des revendications 1 à 6, dans lequel la mesure (110) de la durée d'heure de départ pour le premier utilisateur de véhicule se termine lorsque le véhicule a été en mouvement sur une certaine distance (d).

9. Dispositif destiné à assister un utilisateur d'un véhicule avec des informations concernant une durée d'heure de départ, comprenant :
une mémoire comportant des instructions exécutables,
un ou plusieurs processeurs configurés pour communiquer avec la mémoire, le ou les processeurs étant configurés pour amener le dispositif à :
mesurer une durée d'heure de départ pour un utilisateur de véhicule (201) associé à une zone géographique (206), la mesure (110) de la durée d'heure de départ pour le premier utilisateur de véhicule étant lancée lorsque le premier utilisateur arrive au véhicule et finissant lorsque le véhicule est en mouvement, et
rapporter (230) la durée d'heure de départ mesurée et la zone géographique associée (206) à un service de réseau en nuage (203) pour estimer une durée d'heure de départ actuelle et déterminer tout écart de la durée d'heure de départ actuelle estimée.

10. Dispositif selon la revendication 9, dans lequel le ou les processeurs sont en outre configurés pour amener le dispositif à obtenir (220) des informations météorologiques pour la zone géographique (206), l'heure du jour et le temps de l'année.

11. Véhicule (202) comprenant le dispositif selon l'une quelconque des revendications 9 à 10.

12. Service de réseau en nuage (203) pour assister un utilisateur d'un véhicule avec des informations concernant une durée d'heure de départ, dans lequel le service de réseau en nuage (203) est configuré pour :
recevoir au moins un rapport (230) comprenant des informations concernant une durée d'heure de départ pour un premier utilisateur de véhicule (201) associé à une zone géographique (206), la mesure (110) de la durée d'heure de départ pour le premier utilisateur de véhicule étant lancée lorsque le premier utilisateur arrive au véhicule et finissant lorsque le véhicule est en mouvement, estimer une durée d'heure de départ actuelle sur la base de l'au moins un rapport reçu (220, 230),
déterminer tout écart de la durée d'heure de départ actuelle estimée à partir d'une durée d'heure de départ par défaut, et
lorsqu'un écart est déterminé, notifier (260) à l'au moins deuxième utilisateur de véhicule (207) des informations concernant l'écart déterminé de ladite durée d'heure de départ pour la zone géographique (206).

13. Service de réseau en nuage selon la revendication 12, dans lequel le service de réseau en nuage (203) est en outre configuré pour :
recevoir au moins un rapport (220) comprenant des informations météorologiques pour la zone géographique (206), l'heure du jour et le temps de l'année à partir d'un service de réseau en nuage (208).

14. Système destiné à assister un utilisateur d'un véhicule avec des informations concernant une durée d'heure de départ, comprenant :
un module de mesure du temps (401) configuré pour mesurer une durée d'heure de départ pour un premier utilisateur de véhicule associé à une zone géographique, la mesure (110) de la durée d'heure de départ pour le premier utilisateur de véhicule étant lancée lorsque le premier utilisateur arrive au véhicule et finissant lorsque le véhicule est en mouvement,
un module de rapport (402) configuré pour rapporter la durée d'heure de départ mesurée pour le premier utilisateur de véhicule et la zone géographique associée,
un module d'estimation (403) configuré pour estimer une durée d'heure de départ actuelle pour au moins un deuxième utilisateur de véhicule associé à la zone géographique en fonction de la durée d'heure de départ rapportée,
un module de détermination (404) configuré pour déterminer des écarts de la durée d'heure de départ estimée à partir d'une durée d'heure de départ par défaut, et
un module de notification (405) configuré pour notifier à l'au moins deuxième utilisateur de véhicule des informations concernant ledit écart déterminé de la durée d'heure de départ pour la zone géographique.

15. Système selon la revendication 14, comprenant en outre :
un module d'obtention d'informations météorologiques (406) configuré pour obtenir des informations météorologiques pour la zone géographique, l'heure du jour et le temps de l'année.
